# EUROPÄISCHE PATENTSCHRIFT

(11) **EP 3 399 620 B1**
(45) Veröffentlichungstag und Bekanntmachung des Hinweises auf die Patenterteilung: **07.10.2026**
(21) Anmeldenummer: 18170662.3
(22) Anmeldetag: 03.05.2018
(51) Int. Cl.: F03D 7/02, H02J 3/38, H02J 3/50

(54) **NIEDERSPANNUNGSGEREGELTE WINDENERGIEANLAGE MIT VERBESSERTEM KURZSCHLUSSVERHALTEN**
LOW VOLTAGE REGULATED WIND TURBINE WITH IMPROVED SHORT CIRCUIT CHARACTERISTICS
ÉOLIENNE RÉGULÉE PAR TENSION BASSE À COMPORTEMENT AMÉLIORÉ AUX COURTS-CIRCUITS

(30) Priorität: 04.05.2017 DE 102017004289
(43) Veröffentlichungstag der Anmeldung: 07.11.2018
(73) Patentinhaber: Siemens Gamesa Renewable Energy Service GmbH, 20097 Hamburg (DE)
(72) Erfinder: Letas, Heinz-Hermann, 24796 Bovenau (DE); Pingel, Steffen, 24649 Wiemersdorf (DE)
(74) Vertreter: GLAWE DELFS MOLL

(56) Entgegenhaltungen:
- DE-A1- 102013 206 241
- TSILI M ET AL: "A review of grid code technical requirements for wind farms", IET RENEWABLE POWER GENERA,, vol. 3, no. 3, 8 September 2009 (2009-09-08), pages 308 - 332, XP006033762, ISSN: 1752-1424, DOI: 10.1049/IET-RPG:20080070
- MANSOUR MOHSENI ET AL: "Review of international grid codes for wind power integration: Diversity, technology and a case for global standard", RENEWABLE AND SUSTAINABLE ENERGY REVIEWS, ELSEVIERS SCIENCE, NEW YORK, NY, US, vol. 16, no. 6, 10 March 2012 (2012-03-10), pages 3876 - 3890, XP028496820, ISSN: 1364-0321, [retrieved on 20120319], DOI: 10.1016/J.RSER.2012.03.039
- AEMO: "WP2: Review of Grid Codes", WIND INTEGRATION: INTERNATIONAL EXPERIENCE, 2 October 2011 (2011-10-02), pages 1 - 42, XP055489830
- ERLICH I ET AL: "Grid code requirements concerning connection and operation of wind turbines in Germany", POWER ENGINEERING SOCIETY GENERAL MEETING, 2005. IEEE SAN FRANCISCO, CA, USA JUNE 12-16, 2005, PISCATAWAY, NJ, USA,IEEE, 12 June 2005 (2005-06-12), pages 2230 - 2234, XP010821767, ISBN: 978-0-7803-9157-4, DOI: 10.1109/PES.2005.1489534
- CHE-WEI HSU ET AL: "A low voltage ride-through technique for grid-connected converters of distributed energy resources", ENERGY CONVERSION CONGRESS AND EXPOSITION (ECCE), 2010 IEEE, IEEE, PISCATAWAY, NJ, USA, 12 September 2010 (2010-09-12), pages 3388 - 3395, XP031787512, ISBN: 978-1-4244-5286-6
- JAUME MIRET ET AL: "Control Scheme With Voltage Support Capability for Distributed Generation Inverters Under Voltage Sags", IEEE TRANSACTIONS ON POWER ELECTRONICS, INSTITUTE OF ELECTRICAL AND ELECTRONICS ENGINEERS, USA, vol. 28, no. 11, 1 November 2013 (2013-11-01), pages 5252 - 5262, XP011509212, ISSN: 0885-8993, DOI: 10.1109/TPEL.2013.2246190
- FELTES C ET AL: "Dynamic performance evaluation of DFIG-based wind turbines regarding new German grid code requirements", 2010 IEEE POWER AND ENERGY SOCIETY GENERAL MEETING : [IEEE PES-GM 2010] ; MINNEAPOLIS, MINNESOTA, USA, 25 - 29 JULY 2010, IEEE, PISCATAWAY, NJ, USA, 25 July 2010 (2010-07-25), pages 1 - 7, XP031985466, ISBN: 978-1-4244-6549-1, DOI: 10.1109/PES.2010.5589562

## Beschreibung

Die Erfindung betrifft eine Windenergieanlage, die geregelt wird in Bezug auf die Niederspannungsseite ihres Anlagentransformators. Speziell geht es um das Betriebsverhalten der Windenergieanlage im Falle eines Kurzschlusses oder erheblichen Spannungseinbruchs (sog. LVRT - Low Voltage Ride Through). DE102013206241 A1 beschreibt ein bekanntes Beispiel aus dem Stand der Technik.

Moderne Windenergieanlagen weisen Leistungen von 1 MW oder mehr auf. Zur Übertragung dieser Leistung sind die Windenergieanlagen mit einem Anlagentransformator versehen, der einen Anschluss der Windenergieanlage an ein auf Mittelspannungsniveau betriebenes Parknetz ermöglicht. Die erforderliche Regelung der Windenergieanlage hinsichtlich ihrer Leistungsabgabe kann in Bezug auf die Mittelspannungsseite des Anlagentransformators erfolgen oder in Bezug auf die Niederspannungsseite. Letzteres wird insbesondere bei Windenergieanlagen mit eher kleinerer Leistung verwendet. Wegen der Regelung anhand der Niederspannungsseite bezeichnet man diese Windenergieanlagen auch als Niederspannung-Windenergieanlagen.

Beim Betrieb dieser Niederspannung-Windenergieanlagen erfolgen die Vorgaben der Übertragungsnetzbetreiber in der Regel so, dass sie hinsichtlich des Verhaltens der Windenergieanlagen am Netz auf das Mittelspannungsniveau bezogen sind. Im Regelbetrieb unter Normalbedingungen wirft dies meist keine Probleme auf. Anders stellt sich dies aber dar bei Netzstörungen, insbesondere im Fall einer kurzschlussartigen Störung (LVRT).

In der betrieblichen Praxis werden bei niederspannungsseitig geregelten Windenergieanlagen die - auf das Mittelspannungsniveau bezogenen - Anforderungen der Übertragungsnetzbetreiber angewendet auf das Niederspannungsniveau. Hierbei entsteht jedoch die Problematik, dass im Prinzip ein bestimmtes Verhalten hinsichtlich der Mittelspannungsseite erwartet wird, der dazwischen geschaltete Transformator (oder eine andere komplexe Impedanz) jedoch zu Verfälschungen führt. Das hat zur Folge, dass bei einer auf der Niederspannungsseite geregelten Windenergieanlage das Störfall-Verhalten auf der Mittelspannungsseite, insbesondere bei einem LVRT, häufig nicht so ist, wie eigentlich gefordert bzw. benötigt. Insbesondere kann die an sich vorgegebene Stromabgabe nicht aufrechterhalten werden. Das ist unbefriedigend.

Der Erfindung liegt die Aufgabe zu Grunde, eine verbesserte Niederspannung-Windenergieanlage sowie ein verbessertes Betriebsverfahren für diese anzugeben, welche diesen Nachteil vermindern.

Die erfindungsgemäße Lösung liegt in den Merkmalen der unabhängigen Ansprüche. Vorteilhafte Weiterbildungen sind Gegenstand der abhängigen Ansprüche.

Bei einem Verfahren zum Betreiben einer Windenergieanlage, die einen von einem Windrotor angetriebenen Generator mit Umrichter zur Erzeugung elektrischer Leistung, eine Steigleitung, über welche die erzeugte elektrische Leistung zu einem Anlagentransformator der Windenergieanlage geführt ist, eine Anschlussleitung zur Abgabe der Leistung umfassend Spannung und Strom an ein Netz, und einen Regler aufweist, der den Umrichter unter Verwendung von Messgrößen von nur einer Seite des Anlagentransformators steuert zur Abgabe eines Grundstroms, wobei an den Regler ein Signal für eine Wirk- und/oder Blindleistungsanforderung einer übergeordneten Instanz angelegt ist, wird erfindungsgemäß vorgesehen ein kurzschlussgetriggertes Verschieben der Phasenlage des vom Umrichter abgegebenen Stroms durch ein zusätzliches Einspeisen eines zu dem Grundstrom phasenversetzten Supplementierungsstroms.

Die Erfindung beruht auf dem Gedanken, eine Kurzschlusserkennung zu verknüpfen mit einer gezielt für den Kurzschlussfall vorgesehenen Phasenverschiebung des vom Umrichter abgegebenen Stroms. In diesem Fall wird zusätzlich zu der an sich vorgesehenen Stromabgabe (Grundstrom) ein Supplementierungsstrom zugesteuert, der phasenversetzt ist zu dem Grundstrom. Es wird also planvoll sozusagen zusätzlich ein Strom mit verkehrter, also vom Grundstrom abweichender Phasenlage hinzugefügt. Es ergibt sich somit durch vektorielle Überlagerung eine Phasenverschiebung des abgegebenen Stroms. Im Fall einer Wirkstromvorgabe bedeutet dies, dass als Supplementierungsstrom zusätzlich Blindstrom zugesteuert wird; im Fall einer Blindstromvorgabe bedeutet dies, dass als Supplementierungsstrom zusätzlich Wirkstrom zugesteuert wird.

Die Erfindung hat erkannt, dass durch diese auf den ersten Blick widersinnig erscheinende Zusteuerung eines phasenverkehrten Stroms die an sich störende Reaktanz des Anlagentransformators in nutzbringender Weise verwendet werden kann. Es kann so der gerade im Kurzschlussfall wirksam werdende ausgesprochene kritische Einfluss der Reaktanz des Anlagentransformators kompensiert werden. Indem somit erfindungsgemäß der negative Einfluss des Anlagentransformators zurückgedrängt wird, kann die mittelspannungsseitig an sich gewünschte Art der Leistungsabgabe (gemäß Wirk- bzw. Blindleistungsvorgabe) besser erbracht werden. Dank der Erfindung verhält sich die Windenergieanlage beim Betrieb im kurzschlussartigen Fall (LVRT) somit vorgabetreuer, ohne dass teure Änderungen am Anlagentransformator oder Umrichter an sich erforderlich werden.

Vorzugsweise umfasst ein Kurzschlusstriggern ein Bestimmen eines Kurzschlussspannungsbands mit einer kritischen Spannungsgrenze im Fall eines Spannungseinbruchs, Erkennen ob bei einem Spannungseinbruch die Spannung im Kurzschlussspannungsband unterhalb der kritischen Spannungsgrenze liegt, um so dann, wenn die Spannung im Kurzschlussspannungsband liegt, die Phasenlage des abgegebenen Stroms zu verschieben. Zweckmäßigerweise wird zum Erkennen des Kurzschlussfalls ein Kurzschlussspannungsband mit einer kritischen Spannungsgrenze als Obergrenze definiert, und genau dann, wenn die Spannung in dieses tiefe Spannungsniveau des Kurzschlussspannungsbands absinkt, der Supplementierungsstrom zugesteuert.

Zweckmäßigerweise ist bei einer an sich vorgesehenen Wirkstromabgabe die Abgabe von Blindstrom als Supplementierungsstrom vorgesehen. Diese kann bis zum Betrag des sechsfachen der Wirkstromabgabe betragen. Es verblüfft, dass mit einer derart hohen, an sich parasitären Abgabe von Blindstrom die Vorgabetreue der niederspannungsseitig geregelten Windenergieanlage verbessert wird.

Vorzugsweise erfolgt das Abgeben des Supplementierungsstroms in einem ersten Kurzschlussspannungsband. Hierunter wird ein sehr tiefes Spannungsband verstanden, welches im Bereich der Restspannung bei einem kurzschlussartigen Störfall, wie dem LVRT, liegt. Betragsmäßig liegt es vorzugsweise unterhalb von 20 % der Nennspannung des Netzes, weiter vorzugsweise unterhalb von 15 % der Nennspannung des Netzes. Die Untergrenze wird meist bei 0 % der Nennspannung liegen, es sollen aber etwas höhere Werte bis etwa 5 % oder gar 10 % der Nennspannung nicht ausgeschlossen werden.

Es kann aber auch vorgesehen sein, dass bei einer an sich vorgesehenen Blindleistungsabgabe als Supplementierungsstrom die Abgabe von Wirkstrom vorgesehen ist. Es wurde erkannt, dass im Hinblick auf die übliche Impedanz von Anlagentransformatoren eine Wirkstromeinspeisung als Supplementierungsstrom genügt, die betragsmäßig etwa das Doppelte der an sich vorgesehenen Blindstromeinspeisung beträgt. Auf diese Weise kann eine hohe Vorgabetreue in Bezug auf die mittelspannungsseitigen Vorgaben erreicht werden.

Vorzugsweise erfolgt das Abgeben des Supplementierungsstroms in einem zweiten Kurzschlussspannungsband. Hierunter wird ähnlich wie bei dem ersten Kurzschlussspannungsband ein sehr tiefes Spannungsband verstanden, welches im Bereich der Restspannung bei einem kurzschlussartigen Störfall, wie dem LVRT, liegt. Betragsmäßig unterscheidet es sich jedoch vorzugsweise von dem ersten Kurzschlussspannungsband. Es liegt mit seiner Obergrenze vorzugsweise tiefer als das erste Kurzschlussspannungsband, nämlich unterhalb von 5 % der Nennspannung des Netzes, weiter vorzugsweise unterhalb von 2 % der Nennspannung des Netzes. Die Untergrenze wird meist bei 0 % der Nennspannung liegen, es sollen aber geringfügig höhere Werte nicht ausgeschlossen werden.

Besonders bevorzugt ist, wenn der Supplementierungsstrom einen Phasenversatz von 90° zu dem Grundstrom aufweist. Dieser Phasenversatz ist optimal zur Einspeisung bei Kurzschlussspannung, d. h. im Kurzschlussfall. Erfindungsgemäß kann auch in diesem Fall mit der niederspannungsgeregelten Windenergieanlage eine gute Vorgabetreue in Bezug auf die mittelspannungsseitigen Vorgaben erreicht werden.

Besonders zweckmäßig ist es, wenn die vorstehend beschriebenen Abgabeweisen von Supplementierungsstrom miteinander kombiniert werden. Vorzugsweise wird dann als Supplementierungsstrom ein Scheinstrom abgegeben, der sowohl Wirk- wie auch Blindstrom umfasst. Dies kann beispielsweise durch sukzessive Anwendung auf Wirk-, Blindstrom und/oder kombiniert erfolgen.

Dies ermöglicht eine besonders präzise Angleichung der Phasenverhältnisse auf der Niederspannungs- sowie Mittelspannungsseite des Transformators. Auf diese Weise wird eine optimierte Regelung der niederspannungsseitig geregelten Windenergieanlage erreicht.

Die Erfindung erstreckt sich ferner auf eine Windenergieanlage, die einen von einem Windrotor angetriebenen Generator mit Umrichter zur Erzeugung elektrischer Leistung, eine Steigleitung, über welche die erzeugte elektrische Leistung umfassend Spannung und Strom zu einem Anlagetransformator der Windenergieanlage geführt ist, eine Anschlussleitung zur Abgabe der Leistung an ein Netz, und einen Regler aufweist, der den Umrichter unter Verwendung von Messgrößen von nur einer Seite des Anlagentransformators steuert zur Abgabe eines Grundstroms, wobei an den Regler ein Signal für eine Wirk- und/oder Blindleistungsanforderung einer übergeordneten Instanz angelegt ist, wobei erfindungsgemäß vorgesehen sind ein Kurzschlussdetektor, der einen Spannungseinbruch in ein Kurzschlussspannungsband erfasst, sowie ein Phasenschieber, der von dem Kurzschlussdetektor angesteuert ist und mit dem Umrichter derart zusammenwirkt, dass die Phasenlage des abgegebenen Stroms verschoben wird durch zusätzliches Einspeisen eines zu dem Grundstrom phasenversetzten Supplementierungsstroms.

Zur näheren Beschreibung wird auf vorstehende Ausführungen zu dem erfindungsgemäßen Verfahren verwiesen.

Die Erfindung wird nachfolgend unter Bezugnahme auf die beigefügte Zeichnung anhand eines Ausführungsbeispiels erläutert. Es zeigen:
- Fig. 1:: eine schematische Ansicht einer Windenergieanlage gemäß einem Ausführungsbeispiel der Erfindung;
- Fig. 2:: ein Ersatzschaltbild zu einem Anlagentransformator der Windenergieanlage gemäß Fig. 1;
- Fig. 3:: eine Blockansicht zu einem Kurzschlussdetektor und Zusatzstrom-Steller der Windenergieanlage gemäß Fig. 1;
- Fig. 4:: Diagramme zu Strom und Spannung sowie Leistung bei Abgabe von Blindstrom als Supplementierungsstrom;
- Fig. 5:: Diagramme zu Strom und Spannung sowie Leistung bei Abgabe von Wirkstrom als Supplementierungsstrom;
- Fig. 6:: Diagramme zu Strom und Spannung sowie Leistung und Phasendifferenz bei kombinierter Abgabe von Supplementierungsstrom; und
- Fig. 7:: Diagramme darstellend die Einspeisung von Wirkstrom bei einem LVRT gemäß dem Stand der Technik.

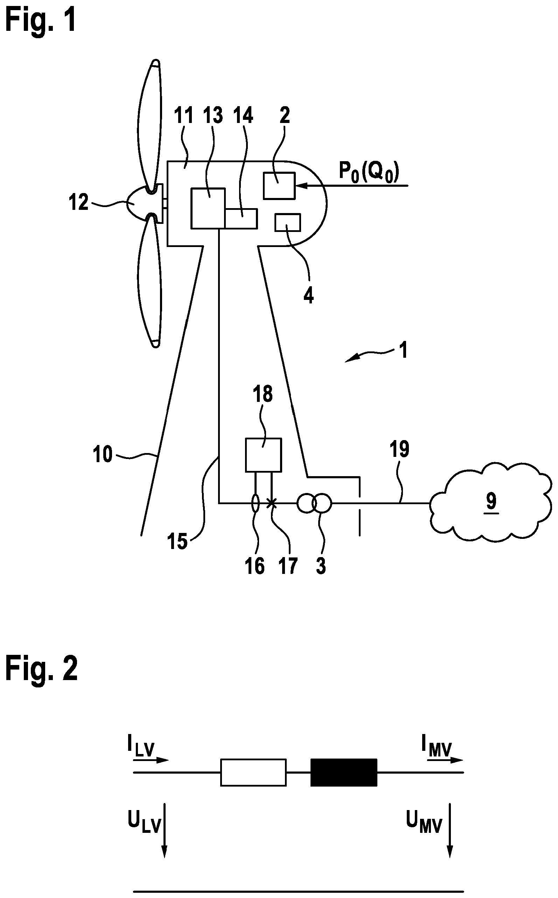

Ein Ausführungsbeispiel für eine Windenergieanlage zur Ausführung des erfindungsgemäßen Verfahrens ist in den Fig. 1 und 2 dargestellt.

Die in ihrer Gesamtheit mit der Bezugsziffer 1 bezeichnete Windenergieanlage weist einen Turm 10 auf, an dessen oberen Ende eine Gondel 11 schwenkbeweglich angeordnet ist. An einer Stirnseite der Gondel 11 ist ein Windrotor 12 über eine Rotorwelle (nicht dargestellt) drehbar gelagert. Der Windrotor 12 treibt über die Rotorwelle einen Generator 13 an, der mit einem Umrichter 14 verbunden ist und die vom Windrotor 12 zugeführte mechanische Leistung in elektrische Leistung umwandelt. Die so erzeugte elektrische Leistung wird über eine Steigleitung 15 zum Fuß des Turms 10 der Windenergieanlage 1 geführt. Dort ist entweder in der Windenergieanlage 1 selbst oder an einer benachbarten Stelle ein zur Windenergieanlage gehörender Anlagentransformator 3 angeordnet. Die Steigleitung 15 ist an dessen Niederspannungsseite angeschlossen. Der Anlagentransformator ist zum Anheben des Niederspannungsniveaus der Windenergieanlage 1 auf ein Mittelspannungsniveau (beispielsweise eines Parknetzes) ausgebildet. An die Mittelspannungsseite des Anlagentransformators 3 ist die Anschlussleitung 19 angeschlossen, über welche die von der Windenergieanlage 1 erzeugte elektrische Leistung abgeführt wird, beispielsweise an ein Netz 9.

Der Betrieb der Windenergieanlage 1 ist gesteuert von einem Regler 2. Er überwacht den Betrieb der Windenergieanlage 1. Insbesondere steuert er auch das System bestehend aus Generator 13 und Umrichter 14 an, um die Abgabe der erzeugten elektrischen Leistung zu steuern. An den Regler 2 kann ein Eingang 20 für eine Vorgabe einer übergeordneten Instanz (insbesondere eines Netzbetreibers) für bestimmte elektrische Quantitäten, wie beispielsweise Wirkleistungsabgabe in das Netz oder Blindleistungsabgabe in das Netz 9, vorgesehen sein. Dies entspricht dem herkömmlichen Aufbau an sich bekannter Windenergieanlagen, und braucht daher nicht weiter im Detail beschrieben zu werden.

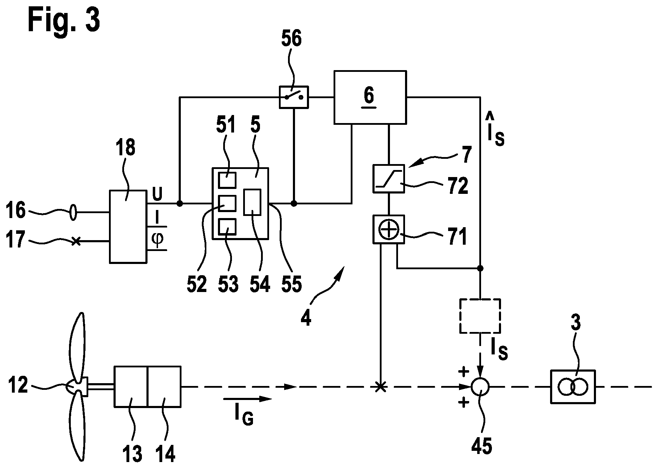

Zusätzlich zu dem Regler 2 ist erfindungsgemäß ein kurzschlussgetriggerter Phasenschieber 4 vorgesehen. Dessen Aufbau und Funktionsweise werden später unter Bezugnahme auf Fig. 3 näher beschrieben.

Windenergieanlagenseitig von dem Anlagentransformator 3, also an dessen Niederspannungsseite, sind Messsensoren für die von der Windenergieanlage 1 erzeugte elektrische Leistung angeschlossen. Sie sind zweckmäßigerweise als Messsensoren 16, 17 für Spannung und Strom ausgeführt. Sie wirken zusammen mit einer Signalaufbereitungseinheit 18, welche aus den Messsignalen Werte für die Spannung U, den Strom I, die abgegebene Wirkleistung P bzw. Blindleistung Q sowie für den Phasenwinkel φ erzeugt. Diese Werte können über (nicht dargestellte) Signalleitungen an den Regler 2 der Windenergieanlage 1 angelegt sein.

In Fig. 3 sind am linken Bildrand die Messsensoren 16, 17 sowie die Signalaufbereitungseinheit 18 angeordnet. Ferner ist zur Veranschaulichung am unteren Rand mit gestrichelter Linie der Leistungsfluss der herkömmlichen Windenergieanlage dargestellt.

Er beginnt bei dem Windrotor 12, der mechanische Leistung dem System bestehend aus Generator 13 mit Umrichter 14 zuführt. Diese wandeln die zugeführte mechanische Leistung in elektrische Leistung, die über die Steigleitung 15 zugeführt wird zu dem Anlagentransformator 3, von wo sie an ein Netz 9 abgegeben wird. Der hierbei fließende Strom wird als Grundstrom bezeichnet.

Es wird nun der Aufbau und die Funktionsweise des kurzschlussgetriggerten Phasenschiebers 4 beschrieben. Er umfasst einen Kurzschlussdetektor 5 und eine Supplementierungsstrom-Einheit 6.

Das von der Signalaufbereitungseinheit 18 stammende Signal U für die Spannung an der Niederspannungsseite des Anlagentransformators 3 ist angelegt an einen Eingang 50 des Kurzschlussdetektors 5. In dem Kurzschlussdetektor 5 können mehrere Submodule 51, 52, 53 vorgesehen sein, von denen jedes ein bestimmtes Spannungsband (erstes, zweites und drittes Spannungsband) definiert. Der Kurzschlussdetektor 5 weist ferner einen Komparator 54 auf, der das von der Signalaufbereitungseinheit 18 angelegte Spannungssignal U mit den von den Submodulen 51, 52, 53 gespeicherten Werten für die jeweiligen Spannungsbänder vergleicht. Liegt der gemessene Spannungswert U in einem der Spannungsbänder, so wird entsprechend ein Ausgangssignal am Ausgang 55 ausgegeben.

Das Signal am Ausgang 55 ist zum einen angelegt an eine Schalteinheit 56 sowie an die Supplementierungsstrom-Einheit 6. Die Schalteinheit 56 schaltet durch, wenn von dem Kurzschlussdetektor 5 ein entsprechendes Ausgangssignal ausgegeben ist. Damit wird das von der Signalaufbereitungseinheit 18 erzeugte Signal für die Spannung U an die Supplementierungsstrom-Einheit 6 angelegt. Zusätzlich wird die Supplementierungsstrom-Einheit 6 durch das direkt von dem Ausgang 56 des Kurzschlussdetektors 5 angelegte Signal aktiviert. Die Supplementierungsstrom-Einheit 6 bestimmt in Abhängigkeit von dem über die Schalteinheit 56 angelegten Spannungssignal ein Ausgangssignal ÎS für einen Supplementierungsstrom. Der auf der Basis dieses Signals erzeugte Supplementierungsstrom IS wird über ein Summationsglied 45 zu dem von dem Generator 13/Umrichter 14 erzeugten Grundstrom hinzugefügt und an die Niederspannungsseite des Anlagentransformators 3 geführt. Der Supplementierungsstrom IS ist phasenversetzt zu dem Grundstrom IG. Handelt es sich beispielsweise bei dem Grundstrom um einen Wirkstrom, so wird als Supplementierungsstrom ein Blindstrom hinzugefügt. Beide werden dann in Kombination niederspannungsseitig an den Anlagentransformator 3 angelegt.

Es sei angemerkt, dass in Fig. 3 die gestrichelten Linien den eigentlichen Leistungsfluss zeigen, während die durchgezogenen Linien für Signalverbindungen stehen. Somit ist das unmittelbare Ausgangssignal der Supplementierungsstrom-Einheit 6, wie in dem Ausführungsbeispiel dargestellt, ein entsprechendes Stromsignal ÎS, das von einer nicht näher dargestellten Leistungskomponente in einen entsprechend großen Strom IS umgesetzt wird. Die Art der Leistungskomponente ist hierbei an sich beliebig. Besonders zweckmäßig ist es, wenn hierzu der ohnehin bereits vorhandene Umrichter 14 herangezogen wird.

Ferner ist ein Betragskontrollmodul 7 vorgesehen. Es erfasst den Betrag des Grundstroms einerseits und den Betrag des Supplementierungsstroms andererseits mit seinen beiden Eingängen. Es bildet daraus eine Vektorsumme 71 der Beträge und stellt mittels eines Limiters 72 sicher, dass auch mit dem zusätzlichen Supplementierungsstrom vorgegebene Stromgrenzen nicht überschritten werden. Dies dient dem Schutz der Leistungskomponenten vor Überlastung.

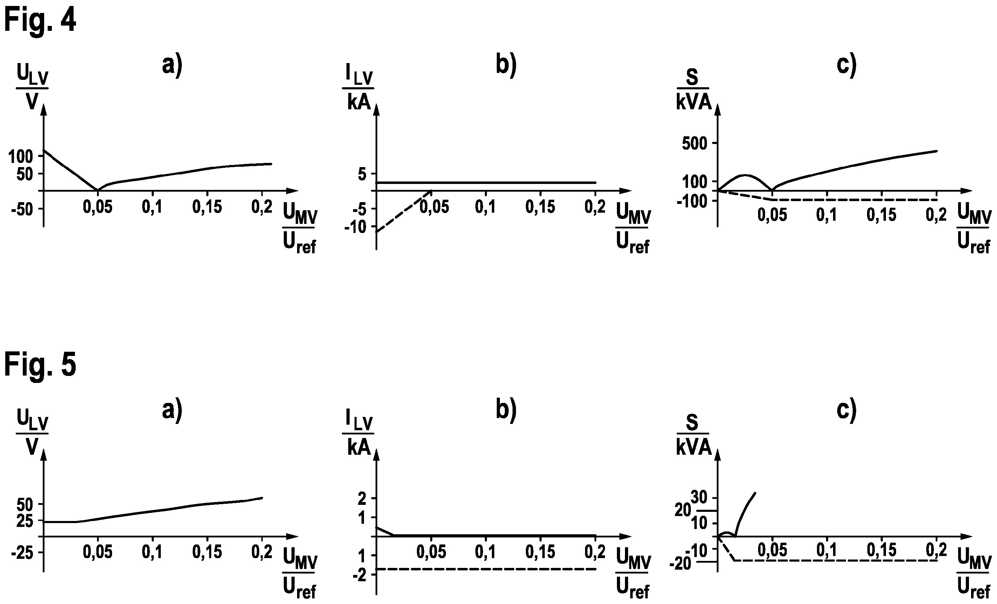

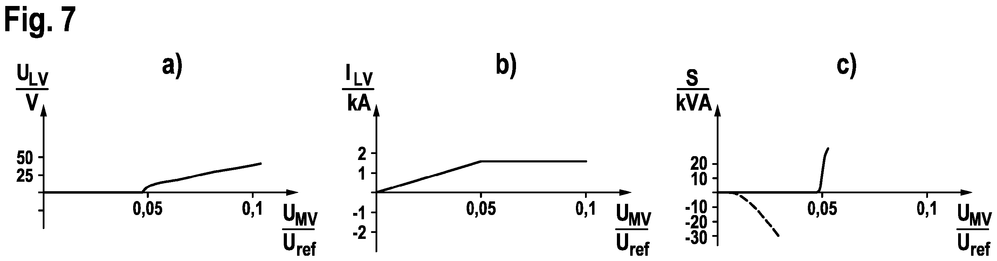

Die Wirkung der Erfindung sei zuerst anhand der Fig. 4 und 7 erläutert. Fig. 7 zeigt den Stand der Technik. Fig. 7A zeigt die Verhältnisse bei sehr kleinen Spannungen im Bereich von weniger als 10 % der Nennspannung für den Fall, dass eine reine Wirkstromeinspeisung erfolgt. Es sei vorgegeben, dass von der Windenergieanlage 1 auf der Mittelspannungsseite des Anlagen-transformators 3 lediglich Wirkstrom eingespeist werden solle. Die sich bei einer kurzschlussartigen Netzstörung (insbesondere LVRT) ergebenden Verhältnisse für Spannung einerseits und Ströme andererseits auf der Niederspannungsseite des Anlagentransformators 3 sind in den Fig. 7A und 7B dargestellt. Die durchgezogenen Linien zeigen die jeweiligen Wirkanteile, während die gestrichelten Linien die jeweiligen Blindanteile darstellen. Ausgehend vom rechten Rand der jeweiligen Diagramme beginnend mit einer Restspannung von 10 % der Nennspannung kann die vorgesehene Wirkstromabgabe noch bis zu einem Stromwert von etwa 1800 A erfolgen. Dies gilt so lange, bis die Spannung auf einen Wert von etwa 5 % der Nennspannung abgesunken ist. Danach bricht die Spannung auf praktisch null zusammen, so dass nunmehr infolge der nicht mehr vorhandenen Spannung auch kaum noch Strom eingespeist werden kann. Die Stromeinspeisung verringert sich mit weiterem Absinken der Spannung beträchtlich (siehe Fig. 7B, linke Bildhälfte) bis hinab zu dem Wert Null. Wegen des Spannungseinbruchs auf praktisch den Wert Null erfolgt unterhalb von 5 % der Nennspannung kaum noch eine Wirkleistungseinspeisung, wie in Fig. 7C zu ersehen ist. Die vom Netzbetreiber gewünschte Einspeisung von Wirkleistung, die er mittels der entsprechenden Wirkstromvorgabe spezifiziert hat, erfolgt demnach im Stand der Technik unterhalb von 5 % nicht mehr.

Es wird Bezug genommen auf die Fig. 4, welche dieselbe Situation unter der Wirkung der erfindungsgemäßen Zugabe von Supplementierungsstrom darstellt. Fig. 4A zeigt wiederum die Verhältnisse bei Absinken der Spannung im Netz, beginnend mit einem Wert von 20 % der Nennspannung bis hinab zu 0 % Nennspannung.

Erfindungsgemäß wird nunmehr dann, wenn die Nennspannung in ein tiefes Spannungsband von 5 % der Nennspannung und weniger fällt, zusätzlich Supplementierungsstrom als Blindstrom eingespeist. Dies ist dargestellt als gestrichelte Linie in Fig. 4B, und zwar der schräge Teil dieser Kennlinie links in der Abbildung. Sowie also die Spannung abfällt in ein Spannungsband von 5 % oder weniger, wird umso mehr Blindstrom als Supplementierungsstrom eingespeist, je tiefer die Spannung fällt. Wie sich dies auf die Leistungseinspeisung auf der Mittelspannungs-seite des Anlagentransformators 3 auswirkt, ist in Fig. 4C dargestellt. Überraschenderweise erkennt man, dass nunmehr im unteren Spannungsband unterhalb von 5 % der Nennspannung die eingespeiste Wirkleistung nicht mehr Null beträgt wie im Stand der Technik (vergleiche Fig. 7C), sondern wieder ansteigt auf beträchtliche Werte und erst bei äußerst kleinen Spannungen (2 % der Nennspannung oder weniger) beginnt abzusinken. Frappierenderweise wird also durch die zusätzliche Einspeisung von Blindstrom als Supplementierungsstrom erreicht, dass die Wirkleistungsabgabe erhöht wird. Den Anforderungen des Netzbetreibers wird damit wesentlich besser genügt.

Anzumerken ist, dass wie aus Diagramm 4B ersichtlich wird, der Supplementierungsstrom auf beträchtliche Beträge anwachsen könnte, nämlich im dargestellten Beispiel theoretisch bis zu einem Mehrfachen des Betrags des eigentlichen Grundstroms (durchgezogene Linie). Es besteht hierbei die Gefahr einer Überlastung der Leistungskomponenten, insbesondere des Umrichters 14. Aus diesem Grund ist das Betragskontrollmodul 7 vorgesehen, welches die Einhaltung eines einstellbaren Schwellwerts überwacht und danach zum Schutz der leistungsführenden Komponenten die weitere Einspeisung von Supplementierungsstrom und/oder des Grundstroms begrenzt.

Es sei nunmehr Bezug genommen auf Fig. 5. Diese zeigt ähnlich wie die Fig. 4 die Verhältnisse bei einer kurzschlussartigen Netzstörung (LVRT), hier jedoch bei einer vom Netzbetreiber angeforderten Einspeisung von Blindleistung. Gemäß dem Stand der Technik wird bei einem weiteren Absinken der Spannung bis in den Bereich von 1 % der Nennspannung hinab zwar noch die vorgesehene Blindstromeinspeisung aufrechterhalten, darunter sinkt sie jedoch rapide auf den Wert Null ab. Dementsprechend bricht im Stand der Technik ab dem Erreichen von besagten 1 % der Nennspannung die an sich gewünschte Abgabe von Blindleistung zusammen.

Erfindungsgemäß ist nunmehr vorgesehen, dass bei Absinken der Spannung nunmehr ab dem Erreichen von 1 % der Nennspannung zusätzlich ein Wirkstrom als Supplementierungsstrom zugeführt wird (siehe Fig. 5B, durchgezogene Linie). Dies hat zur Folge, dass nunmehr auch bei Werten von weniger als 1 % der Nennspannung die Blindstromeinspeisung aufrechterhalten werden kann (siehe Fig. 5B, gestrichelte Linie). Somit kann dank des Supplementierungsstroms auch in diesem Tiefstspannungsbereich unterhalb von 1 % der Nennspannung noch Blindleistung eingespeist werden, wie ein Vergleich von Fig. 5C mit Fig. 8C zeigt. Es sei angemerkt, dass die verbesserte Blindleistungsabgabe erreicht wurde durch die Verwendung von Wirkstrom als Supplementierungsstrom. Überraschenderweise ist hierzu nur ein verhältnismäßig geringer Wirkstrom erforderlich, der weniger als ein Viertel des eingespeisten Blindstroms ausmacht. Die sich so ergebende Mehrbelastung für die leistungsführenden Komponenten ist gering und wird durch die üblichen Toleranzen abgedeckt.

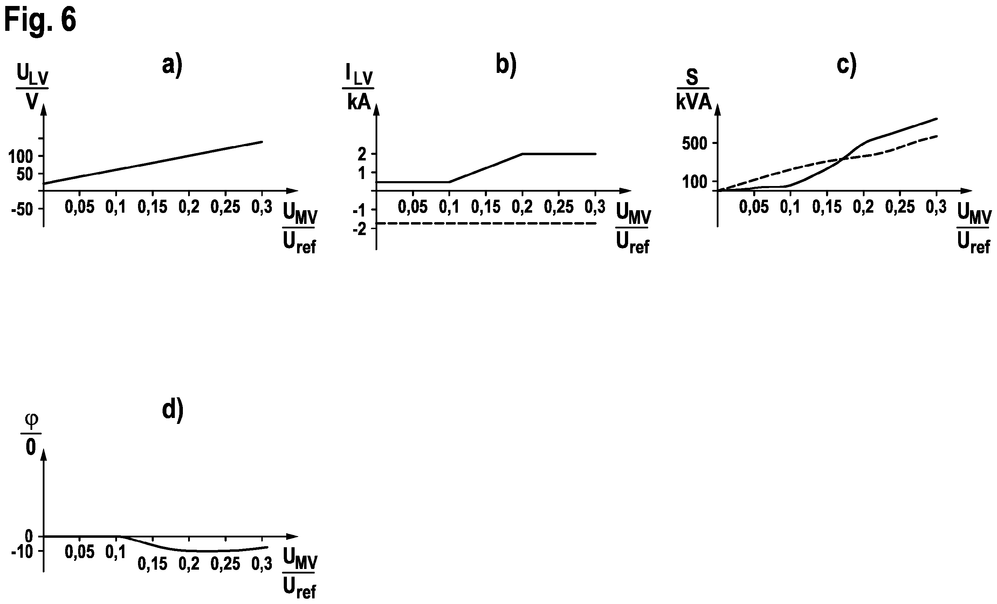

Das in Fig. 6 dargestellte Szenario entspricht einer Kombination der in den Fig. 4 und 5 dargestellten Szenarien. Die vom Netzbetreiber angeforderte Vorgabe ist eine Mischung aus Wirkstrom und Blindstrom-Vorgabe. Erfindungsgemäß wird nunmehr in einem dritten Spannungsband, welches sich im Bereich von 0,1 bis 0,3 der Nennspannung erstreckt, bei Bedarf zusätzlich Wirkstrom eingespeist werden (siehe durchgezogene Linie in Fig. 6B). Der gewählte Blind-strom kann durchgängig eingeprägt werden (siehe gestrichelte Linie in Fig. 6B). Der Spannungsverlauf auf Niederspannungsseite ist in Fig. 6A und der Leistungsverlauf auf der Mittelspannungsseite des Anlagentransformators ist in Fig. 6C dargestellt. Die sich so ergebende Phasendifferenz über den Transformator ist in Fig. 6D dargestellt. Man erkennt, dass trotz der beträchtlichen Supplementierung mit Wirkstrom (bis zum sechsfachen Betrag) sich eine nur unbedeutende Phasenverschiebung über den Anlagentransformator 3 ergibt. Auf diese Weise ermöglicht die Erfindung eine nahezu optimale Mischung von Wirk- und Blindstrom.

## Patentansprüche

1. Verfahren zum Betreiben einer Windenergieanlage, die einen von einem Windrotor (12) angetriebenen Generator (13) mit Umrichter (14) zur Erzeugung elektrischer Leistung, eine Steigleitung (15), über welche die erzeugte elektrische Leistung umfassend Spannung und Strom zu einem Anlagentransformator (3) der Windenergieanlage geführt ist, eine Anschlussleitung (19) zur Abgabe der Leistung an ein Netz (9), und einen Regler (2) aufweist, der den Umrichter (14) unter Verwendung von Messgrößen von nur einer Seite des Anlagentransformators (3) steuert zur Abgabe eines Grundstroms (IG), wobei an den Regler (2) ein Signal für eine Wirk- und/oder Blindleistungsanforderung einer übergeordneten Instanz angelegt ist,
**gekennzeichnet durch**
kurzschlussgetriggertes Verschieben der Phasenlage des abgegebenen Stroms durch zusätzliches Einspeisen eines zu dem Grundstrom (IG) phasenversetzten Supplementierungsstroms (IS).

2. Verfahren nach Anspruch 1, **dadurch gekennzeichnet, dass** ein Kurzschlusstriggern umfasst ein Bestimmen eines Kurzschlussspannungsbands mit einer kritischen Spannungsgrenze im Fall eines Spannungseinbruchs, Erkennen ob bei einem Spannungseinbruch die Spannung im Kurzschlussspannungsband unterhalb der kritischen Spannungsgrenze liegt, und nur in diesem Fall das Verschieben der Phasenlage.

3. Verfahren nach Anspruch 1 oder 2, **dadurch gekennzeichnet, dass** der Supplementierungsstrom um 90° phasenversetzt zu dem Grundstrom ist.

4. Verfahren nach einem der Ansprüche 2 bis 3, **dadurch gekennzeichnet, dass** der Grundstrom ein Wirkstrom und der Supplementierungsstrom ein Blindstrom ist.

5. Verfahren nach Anspruch 4, **dadurch gekennzeichnet, dass** das Abgeben des Supplementierungsstroms in einem ersten Spannungsband erfolgt.

6. Verfahren nach einem der Ansprüche 2 bis 3, **dadurch gekennzeichnet, dass** der Grundstrom ein Blindstrom und der Supplementierungsstrom ein Wirkstrom ist.

7. Verfahren nach Anspruch 6, **dadurch gekennzeichnet, dass** das Abgeben des Supplementierungsstroms in einem zweiten Spannungsband erfolgt.

8. Verfahren nach Anspruch 5 und 7, **dadurch gekennzeichnet, dass** das erste und zweite Spannungsband verschieden groß sind.

9. Verfahren nach einem der vorangehenden Ansprüche, **dadurch gekennzeichnet, dass** als Supplementierungsstrom ein Scheinstrom abgegeben wird, der sowohl Wirk- wie Blind-strom umfasst.

10. Verfahren nach Anspruch 9, **dadurch gekennzeichnet, dass** das Abgeben von Scheinstrom als Supplementierungsstrom in einem dritten Spannungsband erfolgt.

11. Verfahren nach Anspruch 9 oder 10, **gekennzeichnet durch** ein sukzessives Berechnen von Supplementierungsströmen als Blind- und Wirkstrom und nachfolgendes Kombinieren.

12. Windenergieanlage, die einen von einem Windrotor (12) angetriebenen Generator (13) mit Umrichter (14) zur Erzeugung elektrischer Leistung, eine Steigleitung (15), über welche die erzeugte elektrische Leistung umfassend Spannung und Strom zu einem Anlagentransformator (3) der Windenergieanlage geführt ist, eine Anschlussleitung (19) zur Abgabe der Leistung an ein Netz, und einen Regler (2) aufweist, der den Umrichter (14) unter Verwendung von Messgrößen von nur einer Seite des Anlagen-transformators (3) steuert zur Abgabe eines Grundstroms, wobei an den Regler (2) ein Signal für eine Wirk- und/oder Blindleistungsanforderung einer übergeordneten Instanz angelegt ist, **dadurch gekennzeichnet, dass** weiter vorgesehen sind ein Kurzschlussdetektor (5), der einen Spannungseinbruch auf ein Kurzschlussspannungsniveau erfasst, sowie ein Phasenschieber (4), der von dem Kurzschlussdetektor (5) an-gesteuert ist und mit dem Umrichter (14) derart zusammenwirkt, dass die Phasenlage des abgegebenen Stroms verschoben wird durch zusätzliches Einspeisen eines zu dem Grundstrom (IG) phasenversetzten Supplementierungsstroms (IS).

13. Windenergieanlage nach Anspruch 12, **dadurch gekennzeichnet, dass** der Phasenschieber (4) und der Kurzschlussdetektor (5) zur Ausführung des Verfahrens nach einem der Ansprüche 2 bis 11 ausgebildet sind.

## Claims

1. Method for operating a wind power installation, which comprises a generator (13) driven by a wind rotor (12) and having a converter (14) for generating electrical power, a riser line (15) via which the generated electrical power comprising voltage and current is routed to an installation transformer (3) of the wind power installation, a connection line (19) for outputting the power to a grid (9), and a controller (2), which controls the converter (14) using measurement variables from only one side of the installation transformer (3) for the purpose of outputting a basic current (IG), wherein a signal for an active and/or reactive power requirement of a superordinate entity is applied to the controller (2),
**characterized by**
short-circuit-triggered shifting of the phase position of the output current by additionally feeding in a supplementation current (IS) that is phase-shifted with respect to the basic current (IG).

2. Method according to Claim 1, **characterized in that** short-circuit triggering includes determining a short-circuit voltage band with a critical voltage limit in the event of a voltage dip, identifying whether the voltage in the short-circuit voltage band is below the critical voltage limit in the event of a voltage dip, and only in this case shifting the phase position.

3. Method according to Claim 1 or 2, **characterized in that** the supplementation current is phase-shifted with respect to the basic current by 90°.

4. Method according to one of Claims 2 to 3, **characterized in that** the basic current is an active current and the supplementation current is a reactive current.

5. Method according to Claim 4, **characterized in that** the supplementation current is output in a first voltage band.

6. Method according to one of Claims 2 to 3, **characterized in that** the basic current is a reactive current and the supplementation current is an active current.

7. Method according to Claim 6, **characterized in that** the supplementation current is output in a second voltage band.

8. Method according to Claims 5 and 7, **characterized in that** the first and second voltage bands are of different sizes.

9. Method according to one of the preceding claims, **characterized in that** an apparent current including both active and reactive current is output as the supplementation current.

10. Method according to Claim 9, **characterized in that** the apparent current is output as the supplementation current in a third voltage band.

11. Method according to Claim 9 or 10, **characterized by** successive calculation of supplementation currents as reactive and active currents and subsequent combination.

12. Wind power installation, which comprises a generator (13) driven by a wind rotor (12) and having a converter (14) for generating electrical power, a riser line (15) via which the generated electrical power comprising voltage and current is routed to an installation transformer (3) of the wind power installation, a connection line (19) for outputting the power to a grid, and a controller (2), which controls the converter (14) using measurement variables from only one side of the installation transformer (3) for the purpose of outputting a basic current, wherein a signal for an active and/or reactive power requirement of a superordinate entity is applied to the controller (2), **characterized in that** provision is also made of a short-circuit detector (5), which identifies a voltage dip at a short-circuit voltage level, and also a phase shifter (4), which is actuated by the short-circuit detector (5) and interacts with the converter (14) in such a way that the phase position of the output current is shifted by additionally feeding in a supplementation current (IS) that is phase-shifted with respect to the basic current (IG).

13. Wind power installation according to Claim 12, **characterized in that** the phase shifter (4) and the short-circuit detector (5) are designed to carry out the method according to one of Claims 2 to 11.

## Revendications

1. Procédé pour faire fonctionner une éolienne, qui possède un générateur (13) avec convertisseur (14) entraîné par un rotor d'éolienne (12) destiné à produire de l'énergie électrique, une colonne montante (15), par le biais de laquelle la puissance électrique produite, comprenant une tension et un courant, est acheminée à un transformateur de centrale (3) de l'éolienne, un câble de raccordement (19) destiné à délivrer la puissance à un réseau (9), et un régulateur (2), qui commande le convertisseur (14) en utilisant des grandeurs mesurées provenant d'un seul côté du transformateur de centrale (3) afin de délivrer un courant de base (IG), un signal pour une demande de puissance active et/ou réactive d'une instance de niveau supérieur étant appliqué au régulateur (2),
**caractérisé par**
décalage de phase déclenché par court-circuit du courant délivré par injection supplémentaire d'un courant d'appoint (IS) déphasé par rapport au courant de base (IG).

2. Procédé selon la revendication 1, **caractérisé en ce qu'**un déclencheur de court-circuit comprend une détermination d'une bande de tension de court-circuit avec une limite de tension critique dans le cas d'une chute de tension, reconnaissance si, lors d'une chute de tension, la tension dans la bande de tension de court-circuit est inférieure à la limite de tension critique, et décalage de phase uniquement dans ce cas.

3. Procédé selon la revendication 1 ou 2, **caractérisé en ce que** le courant d'appoint est déphasé de 90° par rapport au courant de base.

4. Procédé selon l'une des revendications 2 à 3, **caractérisé en ce que** le courant de base est un courant actif et le courant d'appoint est un courant réactif.

5. Procédé selon la revendication 4, **caractérisé en ce que** la délivrance du courant d'appoint est effectuée dans une première bande de tension.

6. Procédé selon l'une des revendications 2 à 3, **caractérisé en ce que** le courant de base est un courant réactif et le courant d'appoint est un courant actif.

7. Procédé selon la revendication 6, **caractérisé en ce que** la délivrance du courant d'appoint est effectuée dans une deuxième bande de tension.

8. Procédé selon les revendications 5 et 7, **caractérisé en ce que** les première et deuxième bandes de tension sont de tailles différentes.

9. Procédé selon l'une des revendications précédentes, **caractérisé en ce qu'**un courant apparent est délivré en tant que courant d'appoint, lequel comprend à la fois un courant actif et un courant réactif.

10. Procédé selon la revendication 9, **caractérisé en ce que** la délivrance du courant apparent en tant que courant d'appoint est effectuée dans une troisième bande de tension.

11. Procédé selon la revendication 9 ou 10, **caractérisé par** un calcul successif de courants d'appoint en tant que courant réactif et actif, suivi d'une combinaison de ceux-ci.

12. Éolienne, qui possède comprend un générateur (13) avec convertisseur (14) entraîné par un rotor d'éolienne (12) destiné à produire de l'énergie électrique, une colonne montante (15), par le biais de laquelle la puissance électrique produite, comprenant une tension et un courant, est acheminée à un transformateur de centrale (3) de l'éolienne, un câble de raccordement (19) destiné à délivrer la puissance à un réseau, et un régulateur (2), qui commande le convertisseur (14) en utilisant des grandeurs mesurées provenant d'un seul côté du transformateur de centrale (3) afin de délivrer un courant de base, un signal pour une demande de puissance active et/ou réactive d'une instance de niveau supérieur étant appliqué au régulateur (2), **caractérisée en ce qu'**en plus sont prévus un détecteur de court-circuit (5), qui détecte une chute de tension à un niveau de tension de court-circuit, ainsi qu'un déphaseur (4), qui est commandé par le détecteur de court-circuit (5) et coopère avec le convertisseur (14) de telle sorte que la phase du courant délivré est décalée par l'injection supplémentaire d'un courant d'appoint (IS) déphasé par rapport au courant de base (IG).

13. Éolienne selon la revendication 12, **caractérisée en ce que** le déphaseur (4) et le détecteur de court-circuit (5) sont configurés pour mettre en œuvre le procédé selon l'une des revendications 2 à 11.
